# EUROPEAN PATENT SPECIFICATION

(11) **EP 0 455 011 B1**
(45) Date of publication and mention of the grant of the patent: **20.09.1995**
(21) Application number: 91105682.8
(22) Date of filing: 10.04.1991
(51) Int. Cl.: G21C 19/307, G21C 3/32, G21C 3/12

(54) **Debris-resistant lower tie plate assembly**
Trümmerfestes Kernbrennstabbündelfussstück
Embout inférieur d'un assemblage de combustible résistant aux débris

(30) Priority: 04.05.1990 US 518891; 02.08.1990 US 617881
(43) Date of publication of application: 06.11.1991
(73) Proprietor: SIEMENS AKTIENGESELLSCHAFT, 80333 München (DE)
(72) Inventor: Brown, Charles A., Kennewick, WA 99336 (US); Ford, Kenneth L., Richland, WA 99352 (US)

(56) References cited:
- EP-A- 0 049 667
- EP-A- 0 196 611
- EP-A- 0 435 744
- US-A- 4 030 975
- US-A- 4 919 883

## Description

### FIELD OF THE INVENTION

This invention is directed to a debris-resistant nuclear fuel assembly and, more particularly to such an assembly employing a lower tie plate unit constructed to collect potentially harmful debris carried in the flow of coolant material (e.g. water). The invention is particularly useful in combination with a debris-resistant grid spacer arrangement of the type described in U.S. Patent No. 4,849,161, granted to Charles A. Brown et al. on July 18, 1989, which patent is assigned to the same assignee as the present invention.

### BACKGROUND OF THE INVENTION

As is stated in the Brown et al patent, in the operation of nuclear reactors such as pressurized water reactors (PWR's), it has been found that debris such as nuts, bolts, metal cuttings, wire, splices and grommets, drill bits, and pieces of wire sometimes accumulate in the reactor during construction, repair or the like. Certain mid-range sizes (1/2˝ to 4˝) of this type of debris are particularly troublesome, since that debris is likely to be carried by cooling water to the area near the bottom (lower ends) of the fuel rods. The debris vibrates in the moving coolant and impacts principally upon lower ends of the rods, ultimately abrading and wearing away the fuel rod cladding at that point. As is noted in the Brown et al patent, one prior approach to this problem was to use extra long lower end caps on the fuel rods, which end caps did not contain fuel and therefore there would be no escape of radiation if a crack or other opening occurred in the end caps. However, that approach of using elongated end caps may result in a reduction of power output for a given overall size of the reactor.

In the Brown et al. patent, a lowermost grid spacer is described which is positioned on or only slightly above the lower tie plate. The geometry of the Brown grid spacer is arranged to divide the coolant flow openings in the lower tie plate into smaller openings and thereby trap at least part of the debris in the zone near the lower tie plate before the debris comes in contact with the fuel rods.

As an indication of the significance of the debris problem, reference may be made, for example, to recently issued U.S. patents such as No. 4,652,425 - Ferrari et al., granted March 24, 1987; No. 4,684,495 - Wilson et al., granted August 4, 1987; No. 4,684,496 - Wilson et al., granted August 4, 1987; No. 4,781,884 - Anthony, granted November 1, 1988; No. 4,828,791 - De Mario, granted May 9, 1989 and No. 4,832,905 - Bryan et al., granted May 23, 1989.

Particularly in US-A-4,832,905 and 4,919,883 a debris collecting lower tie plate assembly for collecting debris is disclosed which is assembled in the form of a welded "egg crate" grid. In a lower plane the cross area is devided into several rectangular elongated openings while in an upper plane directly above the lower plane the cross area of the assembly is divided in rectangular elongated openings the direction of elongation in the upper plane being perpendicular to the direction in the lower plane. Guide tubes are fastened to the tie plate assemblies by screws which are introduced from below through sleeves forming hollow legs for positioning the tie plate assembly on a core plate and extend through the tie plate assembly into the lower ends of the guide tubes to which they are screwed.

While a number of the foregoing proposals to reduce the debris problem have focussed remedial attention on the region in the vicinity of the lower tie plate, certain of the proposals have required that additional space in the vicinity of the tie plate be taken from the length of the active fuel rods in order to insert means to accomplish the desired collection of debris. Other proposed approaches also may result in an unwanted drop in coolant pressure, thereby adversely affecting the desired heat transfer to the coolant.

The present invention, on the other hand, is directed towards a lower tie plate assembly of reduced vertical dimension (i.e. a low profile tie plate) which is capable of trapping significant additional debris and, furthermore, is well suited for use in combination with the debris-resistant grid spacer described by Brown et al. referred to above.

### STATEMENT OF THE INVENTION

In accordance with one aspect of the present invention, a relatively low profile lower tie plate assembly for interconnecting the lowermost end of an array of reactor fuel rods and guide tubes and for capturing debris carried by flowing coolant comprises substantially planar, spaced apart, upper and lower members and a skirt member extending along the periphery of, enclosing and interconnecting the upper and lower planar members, the lower planar member including a relatively small number of large openings adapted for flow of coolant into the assembly in a vertical direction, the upper planar member comprising an array of a large number of relatively small, debris-resistant, coolant flow holes dimensioned to trap at least a portion of the debris particles carried by the coolant. Upper planar member, lower planar member and skirt member form a cavity. The assembly further comprises a plurality of guide tube screws extending through and fastened to the lower planar member and further extending through the upper planar member to a height sufficient to support and position lowermost extremes of associated guide tubes and surrounding guide tube sleeves which project upwardly from the upper member, the portions of the guide tube screws which extend through the lower member being adapted for engaging alignment pins associated with a support plate for the tie plate assembly.

In accordance with a further aspect of the present invention, a lower tie plate assembly for interconnecting the lowermost end of an array of reactor fuel rods and guide tubes and for capturing debris carried by flowing coolant comprises substantially planar, spaced apart, upper and lower members and a skirt member extending along the periphery of, enclosing and interconnecting the upper and lower planar members, the lower planar member including a relatively small number of large openings adapted for flow of coolant into the assembly in a vertical direction, the upper planar member comprising an array of a large number of relatively small, debris-resistant, coolant flow holes dimensioned to tray at least a portion of the debris particles carried by the coolant. The relatively large openings in the lower planar member are flared inwardly towards a cavity formed by the upper planar member, the lower planar member and the skirt member, the large openings being dimensioned to produce turbulence in the flow of coolant into the cavity to facilitate trapping debris in the cavity.

### BRIEF DESCRIPTION OF THE DRAWING

In the drawing:
FIGURE 1 is an elevation view, partially in section, of a fuel assembly incorporating one version of the present invention, the assembly being foreshortened in height and partially broken away for convenience and clarity;
FIGURE 2 is a view, drawn to a different scale than FIGURE 1, along the line A-A′ shown in FIGURE 1 (i.e. a top view of the assembly);
FIGURE 3 is a sectional view, drawn to the same scale as FIGURE 2, along the line B-B′ shown in FIGURE 1;
FIGURE 4 is a view, drawn to the same scale as FIGURE 3, along the line C-C′ shown in FIGURE 1 (i.e a bottom view of the assembly);
FIGURE 5 is a plan view of the lower tie plate and associated guide tubes shown in FIGURE 1;
FIGURE 6 is a sectional view taken along the line D-D′ in FIGURE 5, including a portion of a lowermost grid spacer which is shown in FIGURE 1 but was eliminated from FIGURE 5 for clarity; and
FIGURE 7 is a sectional view similar to FIGURE 6 of an alternative embodiment of the invention having different dimensional relationships, as well as a different guide tube end fitting and cap screw arrangement.

### DETAILED DESCRIPTION

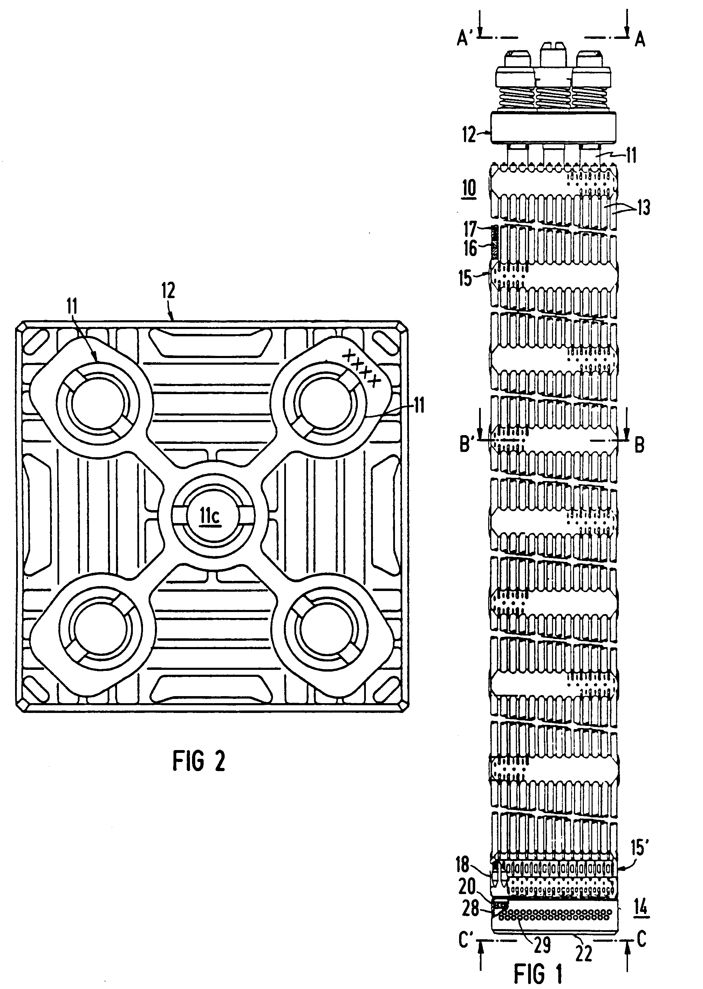

Referring to Figure 1, a 14 x 14 fuel bundle assembly is indicated generally by the reference numeral 10. The fuel assembly 10 includes an upper tie plate 12 and a lower tie plate 14 capturing at opposite ends a plurality of (e.g. 176) fuel rods 13. A plurality of (e.g. five) guide tubes 11 are secured to upper tie plate 12 (see Figure 2) and, as will appear below, to lower tie plate 14. A plurality of grid spacers 15 (e.g. eight) are disposed along the length of the fuel rods 13 at locations between the tie plates 12, 14 and form cells, as is well known, through which the fuel rods 13 and guide tubes 11 extend. A lowermost one 15′ of the grid spacers is illustrated as a debris-resistant spacer of the type shown and described in U.S. Patent No. 4,849,161 of Brown et al. The description of that debris-resistant spacer 15′ contained in the Brown et al. patent is herein incorporated by reference.

Each of the fuel rods 13 includes a stack of fuel pellets 16. The pellets 16 in each stack are maintained in close proximity to each other by means of a spring 17 disposed between an upper end of the rod 13 and the uppermost one of the pellets 16. The lower end cap 18 of each fuel rod is in close proximity to but spaced away from the upper portion of lower tie plate 14 to take into account the expected linear growth of the rods 13 in the normal operation of the reactor. The total height from the bottom of lower tie plate 14 to the top of the uppermost pellet 16 (i.e. the top of the active fuel) may, for example, be several centimeters less than 3,66 m (i.e. a few inches less than twelve feet).

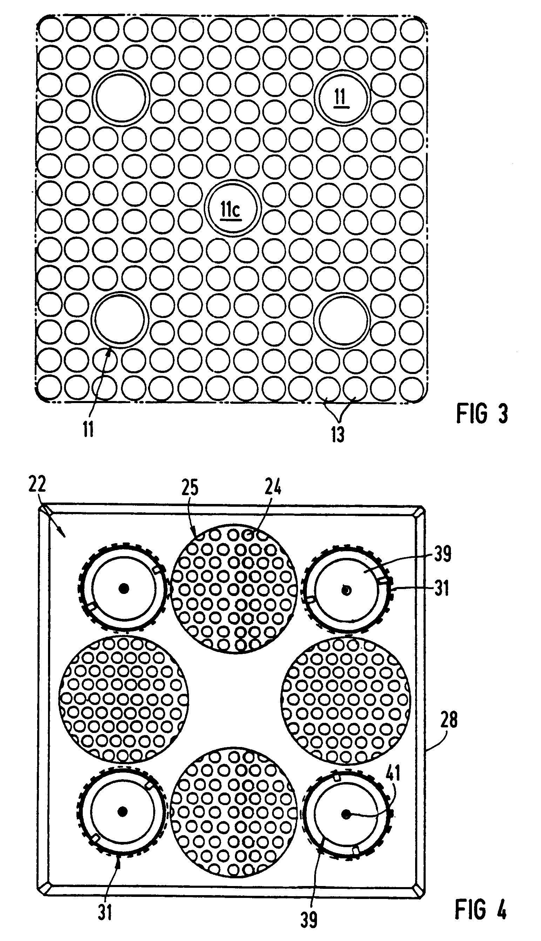

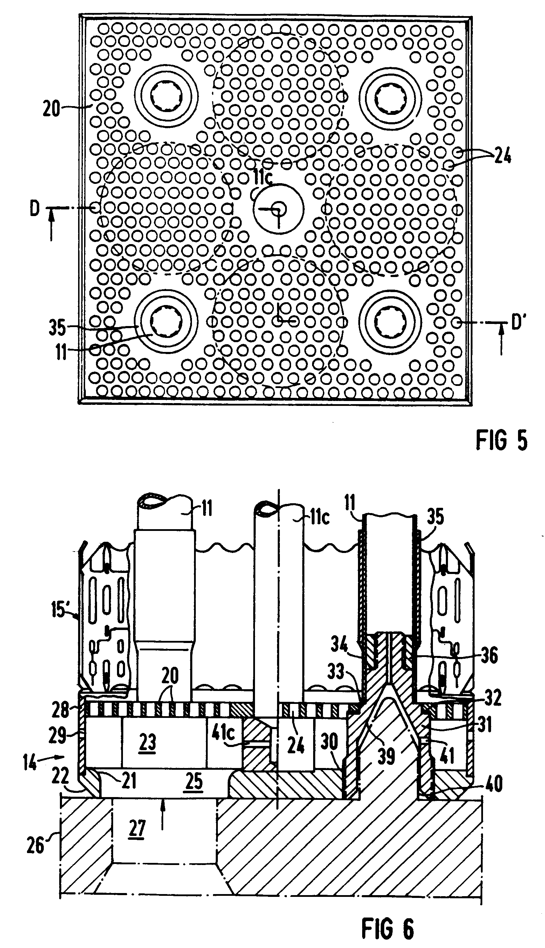

Referring now to Figures 4-6, details of the lower tie plate assembly 14 constructed in accordance with the present invention are shown. As can be seen in the cross-sectional view of Figure 6, lower tie plate 14 comprises a multi-apertured, upper planar member 20 (the plan view of which is shown in Figure 5) and a multi-apertured, lower planar member 22 (the bottom view of which is shown in Figure 4). The upper planar member 20 contains a relatively large number of relatively small diameter (e.g. 0.238 inches diameter ≈ 6 mm) holes 24 while the lower planar member 22 includes a relatively small number (e.g. four) of large openings 25 (e.g. 2.25 inches ≈ 57 mm in diameter), the large openings 25 being adapted for flow of coolant into the assembly in a vertical direction as shown by the arrow in Figure 6.

The lower planar member 22 is designed to rest upon a lower core support plate 26 (shown partially broken away) such that the large openings 25 are aligned with coolant channels 27 in lower core support plate 26. As is shown in Figure 6, the inlet (lower) diameter of the large openings 25 is greater than the outlet (upper) diameter of the immediately adjacent coolant channels 27 in core support plate 26. Furthermore, the outlet (upper) diameter of the large openings 25 is greater than the inlet diameter of openings 25. To that end, a flared (quarter round) outlet 21 is provided for opening 25 to effect a desired pressure drop and particular turbulent flow of the coolant as it enters a cavity 23 formed between upper planar member 20, lower planar member 22 and a surrounding skirt member 28. As can be seen in Figures 1 and 6, skirt member 28 may be provided, if desired, with coolant bypass holes 29, according to the flow requirements of a particular reactor installation.

Referring to Figure 6, it should be noted that the thickness of lower planar member 22 is approximately twice the thickness of upper planar member 20. The greater thickness of lower planar member 22 facilitates threading of a plurality (four) of holes 30 which extend through lower support member 22 and receive guide tube screws 31. The guide tube screws 31 are of special shape and material (preferably Inconel) and include first, second and third shoulders 32, 33 and 34 of progressively decreasing diameter which are dimensioned to abut, respectively, against complementary shoulders in upper planar member 20, at the lowermost end of a guide tube sleeve 35 and at the lowermost shoulder of an internally threaded guide tube nut 36. The guide tube nut 36 is fastened (e.g welded) into the lower end of guide tube 11 and projects beyond the end of guide tube 11 so as to fit within guide tube sleeve 35 and engage a threaded uppermost end of guide tube screw 31.

In the normal assembly of the fuel assembly 10, the guide tubes 11 and complementary guide tube sleeves 35 are assembled in a fixture along with the fuel rods 13. Thereafter, when the guide tubes 11 and sleeves 35 are brought into contact with the upper surface of the upper planar member 20, the guide tube screws 31 are threaded into lower planar member 22 and ultimately into guide tube nuts 36 to fasten the lower tie plate 14 to the fuel assembly 10. The guide tube screws 31 are formed with a hollow conical central portion 39 at their lower portion, the hollow portion 39 being complementary to alignment pins 40 extending upwardly from lower core support plate 26.

A guide tube bleed hole 41 is also provided through the center of each of guide tube screws 31.

The central guide tube llc passes through upper planar member 20 and is provided with a lateral bleed hole 41c extending into the cavity 23.

The central guide tube 11c as illustrated is supported in a conventional manner without the use of a guide tube sleeve or guide tube screw.

The small diameter (6,05 mm ≃ 0.238˝) holes 24 in upper planar member 20 are illustrated as vertically oriented apertures. However, in certain installations, other geometric shapes may be appropriate (see for example, U.S. Application Serial No. 89 E 7499 of Yates, Patterson and Ewing which is assigned to the same assignee as the present invention). The apertures in upper planar member 20, in conjunction with the apertures in lower planar member 22 and the skirt 28 operate to trap a large proportion of debris which has been found to cause undesired wear of the lower ends 18 of rods 13. Specifically, it has been observed that the flow of coolant through the large openings 25 closely follows the rounded corner 21 of the outlet of openings 25 into cavity 23. As a result, typical debris such as metal shavings, wires, nuts and the like carried by the coolant are diverted away from a straight flow path upwardly through cavity 23. The resulting turbulent coolant flow into cavity 23 causes the debris to remain in cavity 23 to a significant degree. The small apertures 24 in upper planar member 20, of course, prevent passage of large pieces of debris as well. The overall effect of the relative sizes and shapes of the large apertures 25, small apertures 24 and cavity 23 have been found to produce an advantageous effect, the degree of which would not be likely to be anticipated prior to actual use of the apparatus.

It should also be noted that the advantageous filtering effect of lower tie plate 14 has been obtained at the same time that the height of the lower tie plate 14 has been reduced by more than 25% (i.e. from 68 mm ≈ 2.677 inches to 50,8 mm ≈ 2.00 inches). This reduction in height of lower tie plate 14 allows for a corresponding addition to the end caps 18 of fuel rods 13 without reducing the power capabilities of the reactor. The longer end caps 18 provide a greater margin of safety for debris resistance. The reduced height of lower tie plate 14, however, can be obtained without reducing the flow of coolant to an undesirable extent.

Furthermore, although the thickness of the upper planar member 20 is reduced as compared to earlier designs, the redesigned guide tube attachment screws 31 which are fastened (threaded) to lower planar member 22 provide the dual function of guide tube attachment and mating with the reactor alignment pins 40 carried on lower core support plate 26.

The use of Inconel material for the guide tube screws 31 is particularly advantageous for reducing the potential for damage to screws 31 in handling or by impact forces.

The foregoing arrangement provides an enhanced degree of resistance to debris. At least a portion of the enhancement is believed to be attributable to the fact that back pressure created in cavity 23 by virtue of the presence of the multi-apertured upper member 20, in combination with the differences in diameters of the juxtaposed coolant flow channels 27, 25 at the inlet to the lower tie plate 14, causes the coolant flow to follow the radius at outlet 21 and thereby create turbulence in cavity 23. Movement of debris particles through lower tie plate 14 is thereby interrupted and debris particles are advantageously collected and retained in cavity 23.

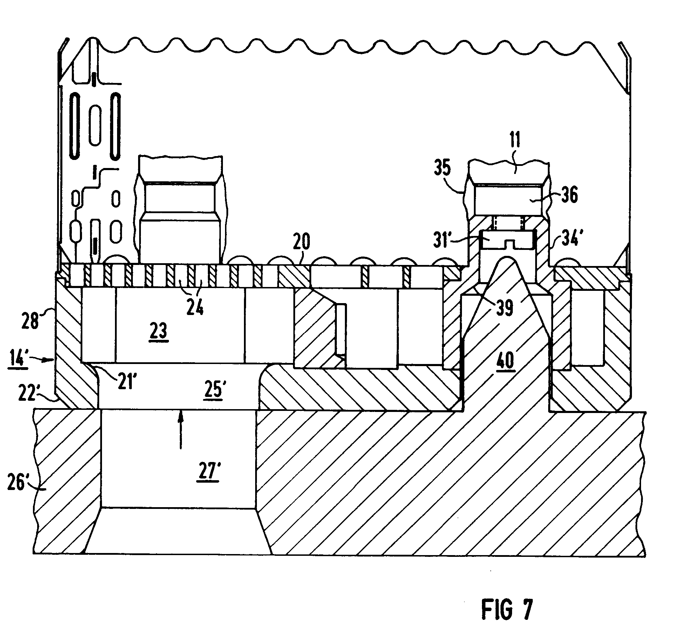

Referring now to Figure 7, details of an alternative lower tie plate assembly 14′ constructed in accordance with a further aspect of the present invention are shown. Reference numerals used in Figure 7 are similar to those used in Figure 6, but are followed by a prime symbol (′) to indicate a difference compared to a corresponding part in Figure 6. In Figure 7, lower tie plate 14′ comprises a multi-apertured, upper planar member 20 and a multi-apertured, lower planar member 22′. The upper planar member 20 contains a relatively large number of relatively small diameter (e.g. 6 mm ≈ 0.238 inches diameter) holes 24 while the lower planar member 22′ includes a relatively small number (e.g. four) of large openings 25′ (e.g. 57 mm ≈ 2.25 inches in diameter), the large openings 25′ being adapted for flow of coolant into the assembly in a vertical direction as shown by the arrow in Figure 7.

The lower planar member 22′ is designed to rest upon a lower core support plate 26′ (shown partially broken away) such that the large openings 25′ are aligned with coolant channels 27′ in lower core support plate 26′. As is shown in Figure 7, the inlet (lower) diameter of the large openings 25′ is equal to or slightly greater than the outlet (upper) diameter of the immediately adjacent coolant channels 27′ in core support plate 26′. Furthermore, the outlet (upper) diameter of the large openings 25′ is greater than the inlet diameter of openings 25′. To that end, a flared (quarter round) outlet 21′ is provided for opening 25′ to effect a desired pressure drop and particular turbulent flow of the coolant as it enters a cavity 23 formed therebetween upper planar member 20, lower planar member 22′ and a surrounding skirt member 28. As can be seen in Figure 6, skirt member 28 may be provided, if desired, with coolant bypass holes according to the flow requirements of a particular reactor installation.

In some applications, the lower tie plate assembly 14′ may include bosses 34′ which abut against the lowermost end of a guide tube sleeve 35 and the lowermost shoulder of an internally threaded guide tube nut 36. The guide tube nut 36 is fastened (e.g. welded) into the lower end of guide tube 11 and projects beyond the end of guide tube 11 so as to fit within guide tube sleeve 35 and engage a threaded uppermost end of guide tube screw 31′.

In the normal assembly of the fuel assembly 10, the guide tubes 11 and complementary guide tube sleeves 35 are assembled in a fixture along with the fuel rods 13. Thereafter, when guide tubes 11 and sleeves 35 are brought into contact with the upper surface of guide bosses 34′, the guide tube screws 31′ are threaded into guide tube nuts 36 to fasten the lower tie plate 14′ to the fuel assembly 10. The guide bosses 34′ may be formed with a hollow conical central portion 39′ at their lower portion, the hollow portion 39′ being generally complementary to alignment pins 40 extending upwardly from the lower core support plate 26′. A guide tube bleed hole may also be provided through the center of each of guide bosses 34′.

Although the thickness of the upper planar member 20 is reduced as compared to earlier designs, the redesigned guide tube bosses 34′ allow attachment screws 31 to be fastened (threaded) to the guide tube nut (end fitting) 36 which provides sufficient clearance for alignment pins 40 carried on lower core support plate 26′.

While the invention has been described in terms of particular embodiments, obvious modifications may occur to persons skilled in this art, and such modifications are intended to be covered by the following claims.

## Claims

1. A relatively low profile lower tie plate assembly (14) for interconnecting the lowermost end (18) of an array of reactor fuel rods (13) and guide tubes (11) and for capturing debris carried by flowing coolant, the tie plate assembly comprising;
substantially planar, spaced-apart, upper and lower members (20; 22) and a skirt member (28) extending along the periphery of, enclosing and interconnecting said upper and lower planar members (20; 22), said lower planar member (22) including a relatively small number of large openings (25) adapted for flow of coolant into said assembly in a vertical direction, said upper planar member (20) comprising an array of a large number of relatively small, debris-resistant, coolant flow openings (24) dimensioned to trap at least a portion of debris particles carried by said coolant;
a cavity (23) formed by said upper planar member (20), said lower planar member (22) and said skirt member (28);
the assembly further comprising a plurality of guide tube screws (31) extending through and fastened to said lower planar member (22) and further extending through said upper planar member (20) to a height sufficient to support and position lowermost extremes of associated guide tubes (11) and surrounding guide tube sleeves (35) which project upwardly from said upper member, the portions of said guide tube screws (31) which extend through said lower member (22) being adapted for engaging alignment pins (40) associated with a support plate (26) for said tie plate assembly.

2. A relatively low profile lower tie plate assembly according to Claim 1 wherein:
said coolant flow openings (24) in said upper planar member (20) comprise generally vertically oriented holes extending through said upper member, said holes being of substantially equal size and in a regular array.

3. A relatively low profile lower tie plate assembly according to Claim 1 wherein:
said coolant flow openings (25) in said lower planar member (22) comprise generally vertically oriented holes extending through said lower member, said holes being of substantially equal size and in a regular array.

4. A relatively low profile lower tie plate assembly according to Claim 1 wherein:
said relatively large openings (25) in said lower planar member comprise a substantially cylindrical lower portion and a flared upper portion (21) opening into said cavity (23).

5. A relatively low profile lower tie plate assembly according to Claim 4 wherein:
said flared upper portion (21) comprises a rounded lip at an entry into said cavity (23) proportioned to produce turbulent flow of said coolant into said cavity.

6. A relatively low profile lower tie plate assembly according to Claim 1 wherein:
said lower planar member includes a plurality of threaded holes (30) for fastening said guide tube screws (31) to said assembly.

7. A relatively low profile lower tie plate assembly according to Claim 1 wherein:
said guide tube screws (31) include a hollow central portion (39) at the lowermost portion thereof adapted to engage alignment pins (40) on an associated support plate.

8. A relatively low profile lower tie plate assembly according to Claim 1 wherein:
said guide tube screws include a threaded end portion extending through said upper planar member for engagement with an associated guide tube nut (36).

9. A relatively low profile lower tie plate assembly according to Claim 8 wherein:
said guide tube screws further include at least one shoulder (32; 33; 34) for engaging said upper planar member (20).

10. In a fuel assembly (10) comprising an upper tie plate (12) and a lower tie plate (14), a plurality of fuel rods (13) extending in a region between said tie plates, a plurality of guide tubes (11) extending between and secured to said upper and lower tie plates (12; 14), a plurality of grid spacers (15; 15′) disposed along said fuel rods at locations between said tie plates and forming cells through which said fuel rods and guide tubes extend, at least said lower tie plate including a plurality of relatively large openings (25) at a lowermost extreme through which coolant flows into said assembly, said lowermost extreme of said lower tie plate (14) being adapted for support by a lower core support plate (26), said support plate having alignment pins (40) projecting therefrom, and said guide tubes (11) being adapted for support within guide tube sleeves (35) extending upwardly from said lower tie plate, the improvement comprising:
said lower tie plate (14) comprising substantially parallel, planar spaced-apart upper and lower members (20; 22) and a skirt member (28) extending along the periphery of and interconnecting said upper and lower planar members, said lower planar member (22) including said relatively large openings (25) adapted for flow of coolant, said upper planar member (20) comprising an array of relatively small, debris-resistant, coolant flow openings (24) dimensioned to trap debris particles carried by said coolant;
a cavity (23) formed by said upper planar member (20), said lower planar member (22) and said skirt member (28);
the assembly further comprising a plurality of guide tube screws (31) extending through and fastened to said lower planar member (22) and further extending through said upper planar member (20) to a height sufficient to support and position the lowermost extremes of associated ones of said guide tube sleeves (35) and said guide tubes (11), the lowermost portions of each of said guide tube screws (31) having a hollowed central portion (39) adapted for engaging said alignment pins (40).

11. In a fuel assembly, apparatus according to Claim 10 wherein:
said coolant flow openings in said upper planar member comprise generally vertically oriented holes (24) extending through said upper member (20), said holes being of substantially equal size and in a regular array.

12. In a fuel assembly, apparatus according to Claim 10 wherein:
said coolant flow openings (25) in said lower planar member (22) comprise generally vertically oriented holes extending through said lower member, said holes being of substantially equal size and in a regular array.

13. In a fuel assembly, apparatus according to Claim 10 wherein:
said relatively large openings (25) in said lower planar member comprise a substantially cylindrical lower portion and a flared upper portion (21) opening into said cavity (23).

14. In a fuel assembly, apparatus according to Claim 13 wherein:
said flared upper portion (21) comprises a rounded lip at an entry into said cavity (23) proportioned to produce turbulent flow of said coolant into said cavity.

15. In a fuel assembly, apparatus according to Claim 10 wherein:
said lower planar member includes a plurality of threaded holes (30) for fastening said guide tube screws (31) to said assembly.

16. In a fuel assembly, apparatus according to Claim 10 wherein:
said guide tube screws include a threaded end portion extending through said upper planar member for engagement with an associated guide tube nut (36).

17. In a fuel assembly, apparatus according to Claim 16 wherein:
said guide tube screws further include at least one shoulder (32; 33; 34) for engaging said upper planar member (20).

18. In a fuel assembly (10) comprising an upper tie plate (12) and a lower tie plate (14), a plurality of fuel rods (13) extending in a region between said tie plates, a plurality of guide tubes (11) extending between and secured to said upper and lower tie plates (12; 14), a plurality of grid spacers (15, 15′) disposed along said fuel rods at locations between said tie plates and forming cells through which said fuel rods and guide tubes extend, at least said lower tie plate including a plurality of relatively large openings (25) at a lowermost extreme through which coolant flows into said assembly, said lowermost extreme of said lower tie plate (14) being adapted for support by a lower core support plate (26), said support plate having coolant flow channels (27) therethrough and having alignment pins (40) projecting therefrom, and said guide tubes (11) being adapted for support within guide tube sleeves extending (35) upwardly from said lower tie plate (14) the improvement comprising:
said lower tie plate comprising substantially parallel, planar spaced-apart upper and lower members (20; 22) and a skirt member (28) extending along the periphery of and interconnecting said upper and lower planar members (20; 22), said lower planar member (22) including said relatively large openings (25) adapted for flow of coolant, said upper planar member comprising an array of relatively small, debris-resistant, coolant flow openings (24) dimensioned to trap debris particles carried by said coolant;
said relatively large openings (25) in said lower planar member (22) being flared inwardly towards a cavity (23) formed by said upper and lower planar members (20; 22) and said skirt member (28) and dimensioned to produce turbulence in the flow of coolant into said cavity to facilitate trapping debris in said cavity.

19. Apparatus according to Claim 18 wherein:
said relatively large openings in said lower planar member comprise a substantially cylindrical lower portion and a flared upper portion (21) opening into said cavity (23).

20. Apparatus according to Claim 19 wherein said flared upper portion comprises a rounded lip at an entry into said cavity (23).

21. Apparatus according to Claim 19 wherein the diameter of said upper portion is greater than the diameter of said lower portion of said large openings (25).

22. Apparatus according to Claim 19 wherein said coolant flow openings in said planar upper member (20) comprise generally vertically oriented holes (24) extending through said upper member.

23. Apparatus according to Claim 22 wherein said holes through said upper member (20) comprise an opening (24) in a lower surface of said upper member with a maximum dimension between opposite sides of said last-named opening of 6,35 mm (one-quarter inch) or less.

24. A lower tie plate assembly for interconnecting the lowermost end (18) of an array of reactor fuel rods (13) and guide tubes (11) and for capturing debris carried by flowing coolant, the tie plate assembly comprising:
substantially planar, spaced-apart, upper and lower members (20; 22) and a skirt member (28) extending along the periphery of, enclosing and interconnecting said upper and lower planar members (20; 22), said lower planar member (22) including a relatively small number of large openings (25) adapted for flow of coolant into said assembly in a vertical direction, said upper planar member (20) comprising an array of a large number of relatively small, debris-resistant, coolant flow openings (24) dimensioned to trap at least a portion of debris particles carried by said coolant;
said relatively large openings (25) in said lower planar member (22) comprising a substantially cylindrical lower portion and a flared upper portion (21) opening into a cavity (23) formed by said upper planar member (20), said lower planar member (22) and said skirt member (28).

25. A lower tie plate assembly according to Claim 24 wherein:
said flared upper portion (21) comprises a rounded lip at an entry into said cavity (23) proportioned to produce turbulent flow of said coolant into said cavity.

26. A lower tie plate assembly according to Claim 24 wherein:
said lower planar member (22) includes a plurality of bosses for fastening guide tubes to said assembly.

27. A lower tie plate assembly according to Claim 24 wherein:
said relatively large openings (25) are dimensioned substantially equal to or greater than coolant flow openings (27) in an associated support plate (26).

28. A lower tie plate assembly according to Claim 24 wherein:
said coolant flow openings (24) in said upper planar member (20) comprise generally vertically oriented holes extending through said upper member, said holes being of substantially equal size and in a regular array.

29. A lower tie plate assembly according to Claim 28 wherein:
said coolant flow openings (25) in said lower planar member (22) comprise generally vertically oriented holes extending through said lower member, said holes being of substantially equal size and in a regular array.

## Patentansprüche

1. Untere Stabhalteplattenanordnung (14) mit relativ niedriger Bauhöhe zur Verbindung des untersten Endes (18) einer Anordnung von Kernbrennstäben (13) mit Führungsrohren (11) und zum Auffangen von von strömendem Kühlmittel mitgeführten Trümmern , wobei die Stabhalteplattenanordnung folgendes umfaßt:
im wesentlichen ebene, voneinander beabstandete obere und untere Teile (20; 22) und eine sich entlang dem Umfang der oberen und unteren ebenen Teile (20; 22) erstreckende und diese umschließende und verbindende Schürze (28), wobei das untere ebene Teil (22) eine relativ geringe Anzahl großer Öffnungen (25) enthält, die zur Strömung des Kühlmittels in vertikaler Richtung in die Anordnung bestimmt sind, wobei das obere ebene Teil (20) eine Anordnung einer großen Anzahl von relativ kleinen, trümmerfesten Kühlmittelstromöffnungen (24) umfaßt, die zum Auffangen von zumindest einem Teil der vom Kühlmittel mitgeführten Trümmerteilchen dimensioniert sind;
einen von dem oberen ebenen Teil (20), dem unteren ebenen Teil (22) und der Schürze (28) gebildeten Hohlraum (23);
wobei die Anordnung weiterhin mehrere Führungsrohrschrauben (31) umfaßt, die sich durch das untere ebene Teil (22) erstrecken und daran befestigt sind und sich weiter so weit durch das obere ebene Teil (20) erstrecken, daß sie die untersten Enden zugehöriger Führungsrohre (11) und umgebender Führungsrohrhülsen (35) stützen und positionieren, die vom oberen Teil nach oben ragen, wobei die Teile der Führungsrohrschrauben (31), die sich durch das untere Teil (22) erstrecken, zur Ineingriffnahme von einer Stützplatte (26) für die Stabhalteplattenanordnung zugeordneten Zentrierstiften (40) bestimmt sind.

2. Untere Stabhalteplattenanordnung mit relativ niedriger Bauhöhe nach Anspruch 1, bei der die Kühlmittelstromöffnungen (24) im oberen ebenen Teil (20) durch das obere Teil verlaufende, allgemein vertikal ausgerichtete Löcher umfassen, wobei die Löcher im wesentlichen gleicher Größe und regelmäßig angeordnet sind.

3. Untere Stabhalteplattenanordnung mit relativ niedriger Bauhöhe nach Anspruch 1, bei der die Kühlmittelstromöffnungen (25) im unteren ebenen Teil (22) durch das untere Teil verlaufende, allgemein vertikal ausgerichtete Löcher umfassen, wobei die Löcher im wesentlichen gleicher Größe und regelmäßig angeordnet sind.

4. Untere Stabhalteplattenanordnung mit relativ niedriger Bauhöhe nach Anspruch 1, bei der die relativ großen Öffnungen (25) in dem unteren ebenen Teil einen im wesentlichen zylindrischen unteren Teil und einen in den Hohlraum (23) mündenden aufgeweiteten oberen Teil (21) umfassen.

5. Untere Stabhalteplattenanordnung mit relativ niedriger Bauhöhe nach Anspruch 4, bei der der aufgeweitete obere Teil (21) an einem Eintritt in den Hohlraum (23) eine abgerundete Lippe umfaßt, die so dimensioniert ist, daß sie eine Kühlmittelströmung mit Wirbelbewegung in den Hohlraum erzeugt.

6. Untere Stabhalteplattenanordnung mit relativ niedriger Bauhöhe nach Anspruch 1, bei der das untere ebene Teil mehrere Gewindelöcher (30) zur Befestigung der Führungsrohrschrauben (31) an der Anordnung enthält.

7. Untere Stabhalteplattenanordnung mit relativ niedriger Bauhöhe nach Anspruch 1, bei der die Führungsrohrschrauben (31) an dem untersten Teil davon einen hohlen mittleren Teil (39) enthalten, der zur Ineingriffnahme von Zentrierstiften (40) an einer zugehörigen Stützplatte ausgeführt ist.

8. Untere Stabhalteplattenanordnung mit relativ niedriger Bauhöhe nach Anspruch 1, bei der die Führungsrohrschrauben einen mit Gewinde versehenen Endteil enthalten, der sich zum Eingriff mit einer zugehörigen Führungsrohrmutter (36) durch das obere ebene Teil erstreckt.

9. Untere Stabhalteplattenanordnung mit relativ niedriger Bauhöhe nach Anspruch 8, bei der die Führungsrohrschrauben weiterhin mindestens eine Anlageschulter (32; 33; 34) zur Ineingriffnahme des oberen ebenen Teils (20) enthalten.

10. Bei einem Brennelement (10) mit einer oberen Stabhalteplatte (12) und einer unteren Stabhalteplatte (14), mehreren Brennstäben (13), die sich in einen Bereich zwischen den Stabhalteplatten erstrecken, mehreren Führungsrohren (11), die sich zwischen der oberen (12) und unteren (14) Stabhalteplatte erstrecken und daran befestigt sind, mehreren Abstandsgittern (15; 15′), die entlang den Brennstäben an Stellen zwischen den Stabhalteplatten angeordnet sind und Zellen bilden, durch die sich die Brennstäbe und Führungsrohre erstrecken, wobei zumindest die untere Stabhalteplatte an einem untersten Ende mehrere relativ große Öffnungen (25) enthält, durch die Kühlmittel in die Anordnung strömt, wobei das unterste Ende der unteren Stabhalteplatte (14) so ausgeführt ist, daß es von einer unteren Kernstützplatte (26) gestützt wird, wobei die Stützplatte daraus vorragende Zentrierstifte (40) aufweist und wobei die Führungsrohre (11) so ausgeführt sind, daß sie in den sich von der unteren Stabhalteplatte nach oben erstreckenden Führungsrohrhülsen (35) gestützt werden, folgende Verbesserung:
jene untere Stabhalteplatte (14) mit im wesentlichen parallelen, ebenen, voneinander beabstandeten oberen und unteren Teilen (20; 22) und einer sich entlang dem Umfang des oberen und unteren ebenen Teils erstreckenden und diese verbindenden Schürze (28), wobei das untere ebene Teil (22) die relativ großen, zur Kühlmittelströmung ausgelegten Öffnungen (25) enthält und das obere ebene Teil (20) eine Anordnung relativ kleiner, trümmerfester Kühlmittelstromöffnungen (24) umfaßt, die zum Auffangen von von dem Kühlmittel mitgeführten Trümmerteilchen dimensioniert sind; einem von dem oberen ebenen Teil (20), dem unteren ebenen Teil (22) und der Schürze (28) gebildeten Hohlraum (23);
wobei die Anordnung weiterhin mehrere Führungsrohrschrauben (31) umfaßt, die sich durch das untere ebene Teil (22) erstrecken und daran befestigt sind und sich weiter so weit durch das obere ebene Teil (20) erstrecken, daß sie die untersten Enden zugehöriger Führungsrohrhülsen (35) und Führungsrohre (11) stützen und positionieren, wobei die untersten Teile jeder der Führungsrohrschrauben (31) einen hohlen mittleren Teil (39) aufweisen, der zur Ineingriffnahme der Zentrierstifte (40) bestimmt ist.

11. Bei einem Brennelement Vorrichtung nach Anspruch 10, bei der die Kühlmittelstromöffnungen im oberen ebenen Teil durch das obere Teil (20) verlaufende, allgemein vertikal ausgerichtete Löcher (24) umfassen, wobei die Löcher im wesentlichen gleicher Größe und regelmäßig angeordnet sind.

12. Bei einem Brennelement Vorrichtung nach Anspruch 10, bei der die Kühlmittelstromöffnungen (25) im unteren ebenen Teil (22) durch das untere Teil verlaufende, allgemein vertikal ausgerichtete Löcher umfassen, wobei die Löcher im wesentlichen gleicher Größe und regelmäßig angeordnet sind.

13. Bei einem Brennelement Vorrichtung nach Anspruch 10, bei der die relativ großen Öffnungen (25) in dem unteren ebenen Teil einen im wesentlichen zylindrischen unteren Teil und einen in den Hohlraum (23) mündenden aufgeweiteten oberen Teil (21) umfassen.

14. Bei einem Brennelement Vorrichtung nach Anspruch 13, bei der der aufgeweitete obere Teil (21) an einem Eintritt in den Hohlraum (23) eine abgerundete Lippe umfaßt, die so dimensioniert ist, daß sie eine Kühlmittelströmung mit Wirbelbewegung in den Hohlraum erzeugt.

15. Bei einem Brennelement Vorrichtung nach Anspruch 10, bei der das untere ebene Teil mehrere Gewindelöcher (30) zur Befestigung der Führungsrohrschrauben (31) an der Anordnung enthält.

16. Bei einem Brennelement Vorrichtung nach Anspruch 10, bei der die Führungsrohrschrauben einen mit Gewinde versehenen Endteil enthalten, der sich zum Eingriff mit einer zugehörigen Führungsrohrmutter (36) durch das obere ebene Teil erstreckt.

17. Bei einem Brennelement Vorrichtung nach Anspruch 16, bei der die Führungsrohrschrauben weiterhin mindestens eine Anlageschulter (32; 33; 34) zur Ineingriffnahme des oberen ebenen Teils (20) enthalten.

18. Bei einem Brennelement (10) mit einer oberen Stabhalteplatte (12) und einer unteren Stabhalteplatte (14), mehreren Brennstäben (13), die sich in einen Bereich zwischen den Stabhalteplatten erstrecken, mehreren Führungsrohren (11), die sich zwischen der oberen (12) und unteren (14) Stabhalteplatte erstrecken und daran befestigt sind, mehreren Abstandsgittern (15; 15′), die entlang den Brennstäben an Stellen zwischen den Stabhalteplatten angeordnet sind und Zellen bilden, durch die sich die Brennstäbe und Führungsrohre erstrecken, wobei zumindest die untere Stabhalteplatte an einem untersten Ende mehrere relativ große Öffnungen (25) enthält, durch die Kühlmittel in die Anordnung strömt, wobei das unterste Ende der unteren Stabhalteplatte (14) so ausgeführt ist, daß es von einer unteren Kernstützplatte (26) gestützt wird, wobei die Stützplatte dadurch verlaufende Kühlmittelstromkanäle (27) und daraus vorragende Zentrierstifte (40) aufweist und wobei die Führungsrohre (11) so ausgeführt sind, daß sie in den sich von der unteren Stabhalteplatte (14) nach oben erstreckenden Führungsrohrhülsen (35) gestützt werden, folgende Verbesserung:
jene untere Stabhalteplatte mit im wesentlichen parallelen, ebenen, voneinander beabstandeten oberen und unteren Teilen (20; 22) und einer sich entlang dem Umfang des oberen (20) und unteren (22) ebenen Teils erstreckenden und diese verbindenden Schürze (28), wobei das untere ebene Teil (22) die relativ großen, zur Kühlmittelströmung ausgelegten Öffnungen (25) enthält und das obere ebene Teil eine Anordnung relativ kleiner, trümmerfester Kühlmittelstromöffnungen (24) umfaßt, die zum Auffangen von von dem Kühlmittel mitgeführten Trümmerteilchen dimensioniert sind;
wobei die relativ großen Öffnungen (25) in dem unteren ebenen Teil (22) nach innen zu einem Hohlraum (23) hin aufgeweitet sind, der von dem oberen (20) und unteren (22) ebenen Teil und der Schürze (28) gebildet wird und so dimensioniert ist, daß er in der Kühlmittelströmung in den Hohlraum eine Wirbelbewegung erzeugt, um das Auffangen von Trümmern im Hohlraum zu erleichtern.

19. Vorrichtung nach Anspruch 18, bei der die relativ großen Öffnungen in dem unteren ebenen Teil einen im wesentlichen zylindrischen unteren Teil und einen in den Hohlraum (23) mündenden aufgeweiteten oberen Teil (21) umfassen.

20. Vorrichtung nach Anspruch 19, bei der der aufgeweitete obere Teil an einem Eintritt in den Hohlraum (23) eine abgerundete Lippe umfaßt.

21. Vorrichtung nach Anspruch 19, bei der der Durchmesser des oberen Teils größer ist als der Durchmesser des unteren Teils der großen Öffnungen (25).

22. Vorrichtung nach Anspruch 19, bei der die Kühlmittelstromöffnungen im oberen ebenen Teil (20) durch das obere Teil verlaufende, allgemein vertikal ausgerichtete Löcher (24) umfassen.

23. Vorrichtung nach Anspruch 22, bei der die Löcher durch das obere Teil (20) in einer unteren Fläche des oberen Teils eine Öffnung (24) umfassen, deren maximale Abmessung zwischen gegenüberliegenden Seiten der zuletztgenannten Öffnung 6,35 mm (1/4 Zoll) oder weniger beträgt.

24. Untere Stabhalteplattenanordnung (14) zur Verbindung des untersten Endes (18) einer Anordnung von Kernbrennstäben (13) mit Führungsrohren (11) und zum Auffangen von von strömendem Rühlmittel mitgeführten Trümmern, wobei die Stabhalteplattenanordnung folgendes umfaßt:
im wesentlichen ebene, voneinander beabstandete obere und untere Teile (20; 22) und eine sich entlang dem Umfang der oberen und unteren ebenen Teile (20; 22) erstreckende und diese umschließende und verbindende Schürze (28), wobei das untere ebene Teil (22) eine relativ geringe Anzahl großer Öffnungen (25) enthält, die zur Strömung des Kühlmittels in vertikaler Richtung in die Anordnung bestimmt sind, wobei das obere ebene Teil (20) eine Anordnung einer großen Anzahl von relativ kleinen, trümmerfesten Kühlmittelstromöffnungen (24) umfaßt, die zum Auffangen von zumindest einem Teil der vom Kühlmittel mitgeführten Trümmerteilchen dimensioniert sind;
wobei die relativ großen Öffnungen (25) in dem unteren ebenen Teil (22) einen im wesentlichen zylindrischen unteren Teil und einen aufgeweiteten oberen Teil (21) umfassen, der in einen von dem oberen ebenen Teil (20), dem unteren ebenen Teil (22) und der Schürze (28) gebildeten Hohlraum (23) mündet.

25. Untere Stabhalteplattenanordnung nach Anspruch 24, bei der der aufgeweitete obere Teil (21) an einem Eintritt in den Hohlraum (23) eine abgerundete Lippe umfaßt, die so dimensioniert ist, daß sie eine Kühlmittelströmung mit Wirbelbewegung in den Hohlraum erzeugt.

26. Untere Stabhalteplattenanordnung nach Anspruch 24, bei der das untere ebene Teil (22) mehrere Nocken zur Befestigung von Führungsrohren an der Anordnung enthält.

27. Untere Stabhalteplattenanordnung nach Anspruch 24, bei der die relativ großen Öffnungen (25) so dimensioniert sind, daß sie im wesentlichen gleich den oder größer als die Kühlmittelstromöffnungen (27) in einer zugehörigen Stützplatte (26) sind.

28. Untere Stabhalteplattenanordnung nach Anspruch 24, bei der die Kühlmittelstromöffnungen (24) im oberen ebenen Teil (20) durch das obere Teil verlaufende, allgemein vertikal ausgerichtete Löcher umfassen, wobei die Löcher im wesentlichen gleicher Größe und regelmäßig angeordnet sind.

29. Untere Stabhalteplattenanordnung nach Anspruch 28, bei der die Kühlmittelstromöffnungen (25) im unteren ebenen Teil (22) durch das untere Teil verlaufende, allgemein vertikal ausgerichtete Löcher umfassen, wobei die Löcher im wesentlichen gleicher Größe und regelmäßig angeordnet sind.

## Revendications

1. Une structure d'embout inférieur (14) de hauteur relativement faible, pour interconnecter l'extrémité inférieure (18) d'un faisceau de crayons combustibles (13) de réacteur et des tubes de guidage (11), et pour capturer des débris qui sont entraînés par un fluide de refroidissement en circulation, la structure d'embout comprenant :
des éléments supérieur et inférieur (20; 22), pratiquement plans et mutuellement à distance, et un élément jupe (28) s'étendant le long de la périphérie des éléments plans supérieur et inférieur (20; 22), et entourant et reliant mutuellement ces derniers, l'élément plan inférieur (22) comprenant un nombre relativement faible de grandes ouvertures (25) permettant le passage du fluide de refroidissement à l'intérieur de la structure, dans une direction verticale, l'élément plan supérieur (20) comprenant un réseau d'un nombre relativement élevé d'ouvertures de passage de fluide de refroidissement relativement petites (24), résistant aux débris, qui sont dimensionnées de façon à piéger au moins une partie des particules de débris qui sont entraînées par le fluide de refroidissement;
une cavité (23) formée par l'élément plan supérieur (20), l'élément plan inférieur (22) et l'élément jupe (28),
la structure comprenant en outre un ensemble de vis de tubes de guidage (31) s'étendant à travers l'élément plan inférieur (22) et fixées à ce dernier, et s'étendant en outre à travers l'élément plan supérieur (20) jusqu'à une hauteur suffisante pour supporter et positionner les extrémités inférieures des tubes de guidage (11) associés et des gaines (35) entourant les tubes de guidage, qui font saillie vers le haut à partir de l'élément supérieur, les parties des vis de tubes de guidage (31) qui s'étendent à travers l'élément inférieur (22) étant adaptées pour s'ajuster sur des doigts d'alignement (40) qui sont associés à une plaque de support (26) pour la structure d'embout.

2. Une structure d'embout inférieur de hauteur relativement faible, selon la revendication 1, dans laquelle :
les ouvertures de passage de fluide de refroidissement (24) dans l'élément plan supérieur (20) sont constituées par des trous d'orientation générale verticale qui s'étendent à travers l'élément supérieur, ces trous ayant des tailles pratiquement égales et étant disposés en un réseau régulier.

3. Une structure d'embout inférieur de hauteur relativement faible selon la revendication 1, dans laquelle :
les ouvertures de passage de fluide de refroidissement (25) dans l'élément plan inférieur (22) sont constituées par des trous d'orientation générale verticale qui s'étendent à travers l'élément inférieur, ces trous ayant des tailles pratiquement égales et étant disposés en un réseau régulier.

4. Une structure d'embout inférieur de hauteur relativement faible selon la revendication 1, dans laquelle :
les ouvertures relativement grandes (25) dans l'élément plan inférieur comprennent une partie inférieure pratiquement cylindrique et une partie supérieure évasée (21) s'ouvrant dans la cavité précitée (23).

5. Une structure d'embout inférieur de hauteur relativement faible selon la revendication 4, dans laquelle :
la partie supérieure évasée (21) comprend une lèvre arrondie à une entrée dans la cavité (23), qui est proportionnée de façon à produire un écoulement turbulent du fluide de refroidissement entrant dans la cavité.

6. Une structure d'embout inférieur de hauteur relativement faible selon la revendication 1, dans laquelle :
l'élément plan inférieur comprend un ensemble de trous taraudés (30) pour la fixation des vis de tubes de guidage (31) à la structure.

7. Une structure d'embout inférieur de hauteur relativement faible selon la revendication 1, dans laquelle :
les vis de tubes de guidage (31) comprennent, à leur partie inférieure, une partie centrale creuse (39) qui est adaptée pour s'ajuster sur des doigts d'alignement (40) sur une plaque de support associée.

8. Une structure d'embout inférieur de hauteur relativement faible selon la revendication 1, dans laquelle :
les vis de tubes de guidage comprennent une partie d'extrémité filetée s'étendant à travers l'élément plan supérieur, pour l'accouplement avec un écrou de tube de guidage (36) associé.

9. Une structure d'embout inférieur de hauteur relativement faible selon la revendication 8, dans laquelle :
les vis de tubes de guidage comprennent en outre au moins un épaulement (32; 33; 34) destiné à s'adapter à l'élément plan supérieur (20).

10. Dans un assemblage combustible (10) comprenant un embout supérieur (12) et un embout inférieur (14), un ensemble de crayons combustibles (13) s'étendant dans une région comprise entre les embouts, un ensemble de tubes de guidage (11) s'étendant entre les embouts supérieur et inférieur (12; 14) et fixés à ces derniers, un ensemble de grilles d'entretoisement (15; 15′) disposées le long des crayons combustibles à des emplacements situés entre les embouts, et formant des cellules à travers lesquelles s'étendent les crayons combustibles et les tubes de guidage, l'embout inférieur comprenant, à une extrémité inférieure, un ensemble d'ouvertures relativement grandes (25) à travers lesquelles un fluide de refroidissement passe vers l'intérieur de l'assemblage, cette extrémité inférieure de l'embout inférieur (14) étant adaptée pour être supportée par une plaque de support de coeur inférieure (26), cette plaque de support comportant des doigts d'alignement (40) qui font saillie à partir d'elle, et les tubes de guidage (11) étant adaptés pour être supportés à l'intérieur de douilles de tubes de guidage (35) qui s'étendent vers le haut à partir de l'embout inférieur, le perfectionnement consistant en ce que :
l'embout inférieur (14) comprend des éléments supérieur et inférieur (20; 22) plans, pratiquement parallèles et mutuellement à distance, et un élément jupe (28) qui s'étend le long de la périphérie des éléments plans supérieur et inférieur et relie ces éléments, l'élément plan inférieur (22) comprenant les ouvertures relativement grandes (25) adaptées pour le passage du fluide de refroidissement, l'élément plan supérieur (20) comprenant un réseau d'ouvertures de passage de fluide de refroidissement (24) relativement petites et résistant aux débris, dimensionnées de façon à piéger des particules de débris qui sont entraînées par le fluide de refroidissement;
une cavité (23) formée par l'élément plan supérieur (20), l'élément plan inférieur (22) et l'élément jupe (28); et
l'assemblage comprend en outre un ensemble de vis de tubes de guidages (31) s'étendant à travers l'élément plan inférieur (22) et fixées à ce dernier, et s'étendant en outre à travers l'élément plan supérieur (20) jusqu'à une hauteur suffisante pour supporter et positionner les extrémités inférieures de gaines et de tubes associés parmi les gaines de tubes de guidage (35) et les tubes de guidage (11), les parties inférieures de chacune des vis de tubes de guidage (31) ayant une partie centrale évidée (39) qui est adaptée pour s'ajuster sur les doigts d'alignement (40).

11. Dans un assemblage combustible, un dispositif selon la revendication 10, dans lequel :
les ouvertures de passage de fluide de refroidissement dans l'élément plan supérieur sont constituées par des trous (24) d'orientation générale verticale qui s'étendent à travers l'élément supérieur (20), ces trous ayant des tailles pratiquement égales et étant disposés en un réseau régulier.

12. Dans un assemblage combustible, un dispositif selon la revendication 10, dans lequel :
les ouvertures de passage de fluide de refroidissement (25) dans l'élément plan inférieur (22) sont constituées par des trous d'orientation générale verticale qui s'étendent à travers l'élément inférieur, ces trous ayant des tailles pratiquement égales et étant disposés en un réseau régulier.

13. Dans un assemblage combustible, un dispositif selon la revendication 10, dans lequel :
les ouvertures relativement grandes (25) dans l'élément plan inférieur comprennent une partie inférieure pratiquement cylindrique et une partie supérieure évasée (21) qui s'ouvre dans la cavité précitée (23).

14. Dans un assemblage combustible, un dispositif selon la revendication 13, dans lequel :
la partie supérieure évasée (21) comprend une lèvre arrondie à une entrée dans la cavité (23) qui est proportionnée pour produire un écoulement turbulent du fluide de refroidissement qui entre dans la cavité.

15. Dans un assemblage combustible, un dispositif selon la revendication 10, dans lequel :
l'élément plan inférieur comprend un ensemble de trous taraudés (30) pour la fixation des vis de tube de guidage (31) à l'assemblage.

16. Dans un assemblage combustible, un dispositif selon la revendication 10, dans lequel :
les vis de tubes de guidage comprennent une partie d'extrémité filetée qui s'étend à travers l'élément plan supérieur pour l'accouplement à un écrou de tube de guidage (36) associé.

17. Dans un assemblage combustible, un dispositif selon la revendication 16, dans lequel :
les vis de tubes de guidage comprennent en outre au moins un épaulement (32; 33; 34) qui est prévu pour s'adapter dans l'élément plan supérieur (20).

18. Dans un assemblage combustible (10) comprenant un embout supérieur (12) et un embout inférieur (14), un ensemble de crayons combustibles (13) s'étendant dans une région comprise entre ces embouts, un ensemble de tubes de guidage (11) s'étendant entre les embouts supérieur et inférieur (12, 14) et fixés à ces derniers, un ensemble de grilles d'entretoisement (15, 15′) disposées le long des crayons combustibles à des emplacements situés entre les embouts, et formant des cellules à travers lesquelles s'étendent les crayons combustibles et les tubes de guidage, l'embout inférieur, au moins, comprenant, à une extrémité inférieure, un ensemble d'ouvertures relativement grandes (25) à travers lesquelles un fluide de refroidissement entre dans l'assemblage, l'extrémité inférieure précitée de l'embout inférieur (14) étant adaptée pour être supportée par une plaque de support de coeur inférieure (26), cette plaque de support étant traversée par des canaux d'écoulement de fluide de refroidissement (27) et ayant des doigts d'alignement (40) qui font saillie à partir d'elle, et les tubes de guidage (11) étant adaptés pour être supportés à l'intérieur de gaines de tubes de guidage (35) s'étendant vers le haut à partir de l'embout inférieur (14), le perfectionnement consistant en ce que :
l'embout inférieur comprend des éléments supérieur et inférieur (20; 22) plans, pratiquement parallèles et à distance, et un élément jupe (28) s'étendant le long de la périphérie des éléments plans supérieur et inférieur (20; 22) et reliant ces derniers, l'élément plan inférieur (22) comprenant les ouvertures relativement grandes (25) qui sont adaptées pour le passage du fluide de refroidissement, l'élément plan supérieur comprenant un réseau d'ouvertures de passage de fluide de refroidissement (24) relativement petites et résistant aux débris, qui sont dimensionnées de façon à piéger des particules de débris entraînées par le fluide de refroidissement; les ouvertures relativement grandes (25) dans l'élément plan inférieur (22) étant évasées du côté de l'intérieur, en direction d'une cavité (23) qui est formée par les éléments plans supérieur et inférieur (20; 22) et par l'élément jupe (28), et étant dimensionnées de façon à produire une turbulence dans l'écoulement du fluide de refroidissement qui entre dans la cavité, pour faciliter le piégeage de débris dans la cavité.

19. Dispositif selon la revendication 18, dans lequel :
les ouvertures relativement grandes dans l'élément plan inférieur comprennent une partie inférieure pratiquement cylindrique et une partie supérieure évasée (21) s'ouvrant dans la cavité (23).

20. Dispositif selon la revendication 19, dans lequel la partie supérieure évasée comprend une lèvre arrondie à une entrée dans la cavité (23).

21. Dispositif selon la revendication 19, dans lequel le diamètre de la partie supérieure est supérieur au diamètre de la partie inférieure des grandes ouvertures (25).

22. Dispositif selon la revendication 19, dans lequel les ouvertures de passage de fluide de refroidissement dans l'élément supérieur plan (20) sont constituées par des trous (24) d'orientation générale verticale qui s'étendent à travers l'élément supérieur.

23. Dispositif selon la revendication 22, dans lequel les trous qui traversent l'élément supérieur (20) comprennent une ouverture (24) dans une surface inférieure de l'élément supérieur, avec une dimension maximale entre des côtés opposés de l'ouverture mentionnée en dernier de 6,35 mm (un quart de pouce) ou moins.

24. Une structure d'embout inférieur pour interconnecter l'extrémité inférieure (18) d'un réseau de crayons combustibles (13) de réacteur et de tubes de guidage (11), et pour capturer des débris qui sont entraînés par un fluide de refroidissement en circulation, la structure d'embout comprenant :
des éléments supérieur et inférieur (20; 22) pratiquement plans et mutuellement à distance, et un élément jupe (28) s'étendant le long de la périphérie des éléments plans supérieur et inférieur (20; 22), et entourant et reliant ces éléments, l'élément plan inférieur (22) comprenant un nombre relativement petit de grandes ouvertures (25) adaptées pour le passage du fluide de refroidissement à l'intérieur de la structure, dans une direction verticale, l'élément plan supérieur (20) comprenant un réseau d'un grand nombre d'ouvertures de passage de fluide de refroidissement (24) relativement petites et résistant aux débris, qui sont dimensionnées pour piéger au moins une partie des particules de débris qui sont entraînées par le fluide de refroidissement;
les ouvertures relativement grandes (25) dans l'élément plan inférieur (22) comprenant une partie inférieure pratiquement cylindrique et une partie supérieure évasée (21) s'ouvrant dans une cavité (23) qui est formée par l'élément plan supérieur (20), l'élément plan inférieur (22) et l'élément jupe (28).

25. Une structure d'embout inférieur selon la revendication 24, dans laquelle :
la partie supérieure évasée (21) comprend une lèvre arrondie à une entrée dans la cavité (23), qui est proportionnée pour produire un écoulement turbulent du fluide de refroidissement qui entre dans la cavité.

26. Une structure d'embout inférieur selon la revendication 24, dans laquelle :
l'élément plan inférieur (22) comprend un ensemble de bossages pour la fixation de tubes de guidage sur la structure.

27. Une structure d'embout inférieur selon la revendication 24, dans laquelle :
les ouvertures relativement grandes (25) sont dimensionnées de façon à avoir des tailles pratiquement égales ou supérieures à celles d'ouvertures de passage de fluide de refroidissement (27) dans une plaque de support (26) associée.

28. Une structure d'embout inférieur selon la revendication 24, dans laquelle :
les ouvertures de passage de fluide de refroidissement (24) dans l'élément plan supérieur (20) sont constituées par des trous d'orientation générale verticale qui s'étendent à travers l'élément supérieur, ces trous ayant des tailles pratiquement égales et étant disposés en un réseau régulier.

29. Une structure d'embout inférieur selon la revendication 28, dans laquelle :
les ouvertures de passage de fluide de refroidissement (25) dans l'élément plan inférieur (22) sont constituées par des trous d'orientation générale verticale qui s'étendent à travers l'élément inférieur, ces trous ayant des tailles pratiquement égales et étant disposés en un réseau régulier.
